# EUROPÄISCHE PATENTSCHRIFT

(11) **EP 0 545 334 B1**
(45) Veröffentlichungstag und Bekanntmachung des Hinweises auf die Patenterteilung: **01.02.1995**
(21) Anmeldenummer: 92120388.1
(22) Anmeldetag: 28.11.1992
(51) Int. Cl.: F02M 25/022, B01F 5/00

(54) **Emulgiervorrichtung zum Emulgieren von Dieselkraftstoff und Wasser**
Device for emulsifying diesel oil and water
Dispositif pour produire une émulsion gazole-eau

(30) Priorität: 03.12.1991 DE 4139782
(43) Veröffentlichungstag der Anmeldung: 09.06.1993
(73) Patentinhaber: Steinmaier, Roland, D-73550 Waldstetten (DE)
(72) Erfinder: Steinmaier, Roland, D-73550 Waldstetten (DE)
(74) Vertreter: Weitzel, Wolfgang, Dr.-Ing.

(56) Entgegenhaltungen:
- EP-A- 0 392 545
- DE-A- 3 123 743
- LU-A- 55 206
- US-A- 4 594 969

## Beschreibung

Die Erfindung betrifft eine Emulgiervorrichtung gemäß dem Oberbegriff von Anspruch 1. Eine solche Vorrichtung ist aus EP-A-392 545 bekannt.

Mit solchen Vorrichtungen hergestellte Emulsionen aus Dieselöl und Leitungswasser werden dem Motor eines Kraftfahrzeuges über bereits vorhandene Einspritzanlagen zugeführt. Der Vorteil solcher Vorrichtungen liegt in deren einfachem Aufbau. Das Tanken ist nicht komplizierter als bei Einspritzen von nicht-emulgiertem Dieselkraftstoff. Das Mischungsverhältnis wird im allgemeinen elektronisch geregelt. Hierdurch lassen sich Emulsionen variablen Wassergehaltes herstellen und entsprechend der momentanen Belastung und Drehzahl dem Motor zuführen.

Ein ganz entscheidender Vorteil der Verwendung von Dieselkraftstoff-Wasser-Emulsionen liegt in der Verringerung der Stickoxide sowie der Rußemissionen. Außerdem besteht aufgrund der Rußverringerung die Möglichkeit des Einbaus eines Katalysators.

Ganz allgemein sind an Emulgiervorrichtungen der eingangs genannten Art die folgenden Anforderungen zu stellen:
die zum Herstellen der Emulsion erforderliche Verwirbelung sollte ohne Zuhilfenahme mechanischer (rotierender) Elemente vonstatten gehen;
eine Schaumbildung sollte vermieden werden;
die Emulsion sollte dort erzeugt werden, wo sie tatsächlich benötigt wird, d.h. möglichst unmittelbar im Bereich der Einspritzpumpe;
die Menge der Emulsion sollte dem Verbrauch des Motors anpaßbar sein;
die Emulsion sollte entsprechend der Motorleistung fett oder mager sein; hierzu ist es vor allem erforderlich, den Wassergehalt entsprechend den jeweiligen Betriebsbedingungen in feinfühliger Weise zu steuern;
der bauliche Aufwand der Vorrichtung sollte möglichst gering gehalten werden, um die Herstellungskosten klein zu halten.

Diese Anforderungen werden von bekannten Emulgiervorrichtungen nur ungenügend erfüllt. Insbesondere haben die bekannten Geräte zum Erzeugen der Verwirbelung rotierende Teile in der Wirbelkammer. Deshalb läßt sich eine Schaumbildung nicht vermeiden. Diese ist jedoch besonders nachteilig, weil hierdurch der Flammpunkt erhöht und damit die Selbstzündung verzögert wird.

Außerdem ist das Volumen der mit bekannten Vorrichtungen erzeugten Emulsion relativ groß, was bei häufigem Wechsel der Lastbereiche zu Ungenauigkeiten der dosierten Menge führt. Schließlich muß die benötigte Menge an Emulgat auf Vorrat erzeugt werden.

Der Erfindung liegt die Aufgabe zugrunde, eine Emulgiervorrichtung gemäß dem Oberbegriff von Anspruch 1 derart zu gestalten, daß die Vermischung von Dieselkraftstoff und Wasser so perfekt wie möglich wird. Insbesondere soll die Tropfengröße verringert werden, jegliche Schaumbildung unterbleiben, jegliche sich bewegende Einbauten vermieden werden und der konstruktive Aufbau und damit auch die Herstellungskosten gegenüber bekannten Vorrichtungen verringert werden.

Diese Aufgabe wird durch die kennzeichnenden Merkmale von Anspruch 1 gelöst.

Die Erfindung ist anhand der Zeichnung näher erläutert. Darin ist im einzelnen folgendes dargestellt:
Fig. 1 zeigt eine Emulgiervorrichtung in einer Schnittansicht.

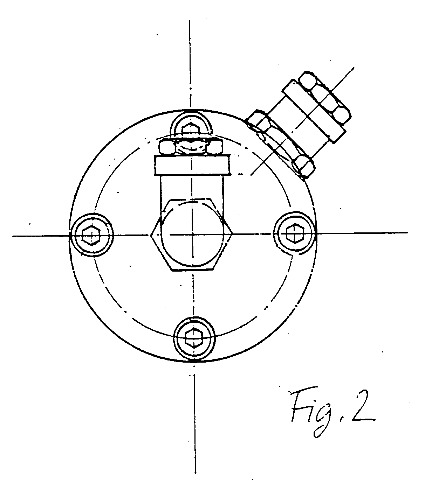

Fig. 2 zeigt eine Draufsicht auf die linksseitige Stirnseite der Vorrichtung.
Fig. 3 zeigt in vergrößertem Maßstab den rechten der beiden Hohlkörper, der sich in der Mischkammer der Vorrichtung befindet.
Fig. 4 zeigt eine Ansicht gemäß der Schnittlinie A-A in Fig. 3.

Die Emulgiervorrichtung weist im einzelnen ein Gehäuse 1 auf. Dieses ist in zwei Teilgehäuse 1.1, 1.2 unterteilt. Das Gehäuse umschließt eine Mischkammer mit inneren Wandflächen 2. Gehäuseteil 1.1 weist eine Anschlußbohrung 3 auf, die eine Wassereinspritzdüse 4 aufnimmt. Außerdem ist im Gehäuseteil 1.1 ein Anschluß 5.1 zum Zuführen von Dieselkraftstoff vorgesehen. Gehäuseteil 1.2 weist eine Gewindebohrung 7 auf. In diese ist ein Fitting 8 zum Abführen von Dieselkraftstoff-Wasser-Gemisch eingeschraubt. Man erkennt ferner einen Anschluß 5.2 für den Rücklauf von der hier nicht dargestellten Einspritzpumpe.

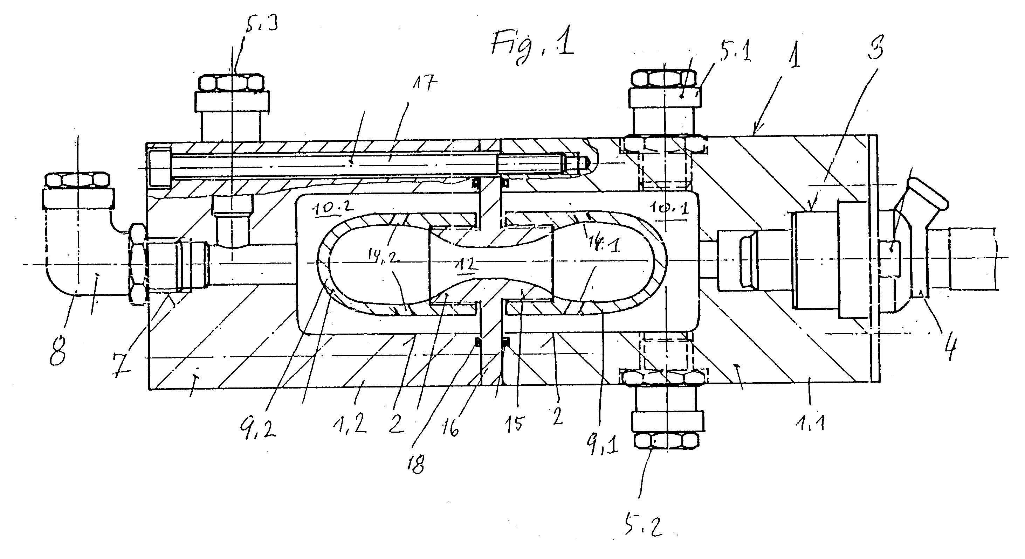

Gemäß der Erfindung sind innerhalb der Mischkammer zwei Hohlkörper 9.1, 9.2 angeordnet, die jeweils eine Wirbelkammer bilden. Zwischen der inneren Wandfläche 2 der Mischkammer und der Außenfläche eines jeden Hohlkörpers 9.1, 9.2 befindet sich ein erster bzw. ein zweiter Zwischenraum 10.1, 10.2. Der erste Zwischenraum 10.1 steht mit den Anschlüssen für Dieselkraftstoff bzw. für Wasser in leitender Verbindung. Der zweite Zwischenraum 10.2 steht mit dem Anschluß 7, 8 für das fertige Gemisch in leitender Verbindung. Die beiden Wirbelkammern sind durch einen Kanal 12 miteinander verbunden. Man erkennt ferner aus Figur 1 einen Anschluß 5.3, der Bestandteil eines Bypass zwischen dem ersten Zwischenraum 10.1 und dem zweiten Zwischenraum 10.2 ist.

Die erste Wirbelkammer ist über Bohrungen 14.1 in der Wand des ersten Hohlkörpers 9.1 mit dem ersten Zwischenraum 10.1 leitend verbunden; die zweite Wirbelkammer ist über Bohrungen 14.2 in der Wand des zweiten Hohlkörpers 9.2 mit dem zweiten Zwischenraum 10.2 verbunden.

Wie man weiterhin sieht, ist der Kanal nach Art einer Venturidüse ausgebildet; er bildet somit einen Doppeltrichter mit einer Engstelle im mittleren Bereich seiner Längserstreckung. Dabei ist der Kanal 12 aus einem zylindrischen Kohlkörper 15 gebildet. Im mittleren Bereich seiner Längserstreckung ist eine kreisförmige Scheibe 16 an den Körper 15 angesetzt. Die beiden Teile 15 und 16 sind einteilig miteinander und beispielsweise durch Gießen hergestellt.

Die beiden Hohlkörper 9.1 und 9.2 haben wenigstens annähernd die Form von Fingerhüten. Sie sind von beiden Seiten her auf den zylindrischen Körper 15 aufgesetzt. Die Verbindung zwischen dem zylindrischen Körper 15 und den beiden Hohlkörpern 9.1, 9.2 kann beispielsweise durch Aufschrauben geschehen.

Die Scheibe 16 ist zwischen den beiden Gehäuseteilen 1.1 und 1.2 eingespannt. Eine Mehrzahl von Bolzenschrauben 17 dient dem Festspannen. Im übrigen trennt die Scheibe 16 die beiden Zwischenräume 10.1 und 10.2 voneinander. Dichtungsringe 18 sorgen für zuverlässige Abdichtung.

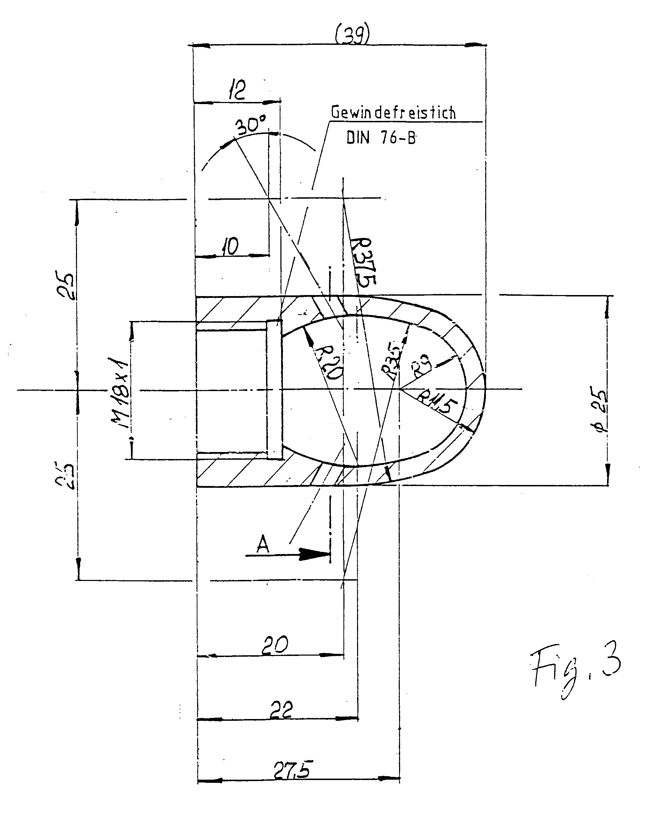

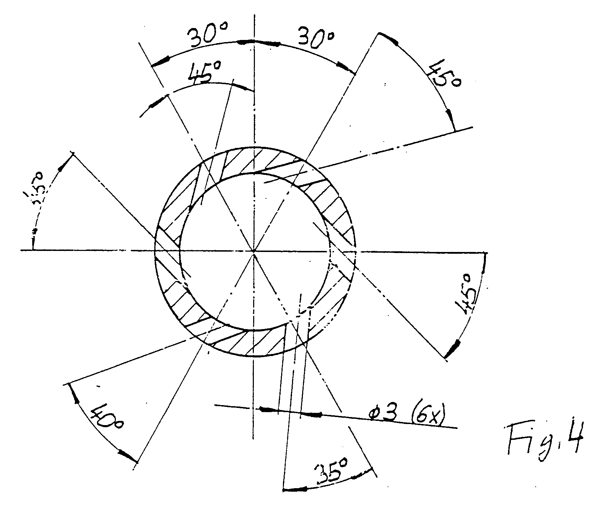

Aus den Figuren 3 und 4 erkennt man bauliche Einzelheiten der Hohlkörper 9.1, 9.2. Diese Einzelheiten können entscheidend sein für ein optimales Arbeiten der Emulgiervorrichtung. So erkennt man unter anderem, daß die von den Hohlkörpern - hier Hohlkörper 9.1 - umschlossene Wirbelkammer in dieser Darstellung eine im wesentlichen elliptische Gestalt hat. Insgesamt gesehen hat die Wirbelkammer die Gestalt eines Rotationsellipsoids. Ferner erkennt man aus Figur 4, daß die Bohrungen in der Wand des Hohlkörpers 9.1 gegen die Radialrichtung geneigt sind. Auf die angegebenen Neigungswinkel wird verwiesen. Es versteht sich, daß Hohlkörper 9.2 in gleicher Weise gestaltet ist, und zwar bezüglich der Form der Wirbelkammer als auch bezüglich der Neigung der Bohrungen.

Die Emulgiervorrichtung arbeitet wie folgt: die beiden Flüssigkeiten, die in die Anschlüsse von Gehäuseteil 1 eingeführt werden, gelangen zunächst in den Zwischenraum 10.1. Dort findet eine Vorvermischung statt. Dieses technologisch noch unvollkommene Gemisch gelangt sodann durch die Bohrungen 14.1 in die erste Wirbelkammer. Dort findet eine weitere, wesentlich gründlichere Emulgierung statt.

Bei der Strömung durch Kanal 12 wird dieses Gemisch etwa auf der Mitte der Kanallänge einem relativ geringen Druck ausgesetzt, und sodann wieder am Ausgang des Kanals 12 einem höheren Druck. Das Gemisch gelangt sodann in die zweite Wirbelkammer, die aus Hohlkörper 9.2 gebildet ist. Auch hier findet eine weitere Vermischung bei gleichzeitiger Verkleinerung der Tropfen der beteiligten Komponenten statt. Schließlich tritt das Gemisch aus der zweiten Wirbelkammer durch die Bohrungen 14.2 aus, gelangt in den zweiten Zwischenraum 10.2 und von dort zu Fitting 8, von wo aus es einem Motor (nicht dargestellt) zugeführt wird.

Das Prinzip der Erfindung nutzt somit einen rapiden Wechsel zwischen Spannen und Entspannen aus.

Es versteht sich, daß die gesamte Anlage alle übrigen, normalerweise verwendeten Bauteile umfaßt, nämlich eine Wasserpumpe, einen Wasser-Druckregler, einen Wasserfilter, einen Wassertank, desgleichen eine Dieselkraftstoff-Pumpe, einen Dieselkraftstoff-Druckregler, einen Dieselfilter sowie einen Dieseltank. Die gesamte Anlage ist mit der üblichen Elektronik gesteuert. Dies ist jedoch nicht Gegenstand der Erfindung.

## Patentansprüche

1. Emulgiervorrichtung zum Emulgieren von Dieselkraftstoff und Wasser mit den folgenden Merkmalen:
1.1 ein Gehäuse (1), das eine Mischkammer mit einer inneren Wandfläche (2) enthält;
1.2 einen Anschluß (3) am Gehäuse (1) für eine Wassereinspritzdüse (4);
1.3 einen Anschluß am Gehäuse zum Zuführen von Dieselkraftstoff;
1.4 einen Anschluß (7, 8) am Gehäuse (1) zum Abführen von Gemisch aus Dieselkraftstoff und Wasser; gekennzeichnet durch die folgenden Merkmale:
1.5 innerhalb der Mischkammer sind zwei Hohlkörper (9.1, 9.2) angeordnet, die jeweils eine Wirbelkammer bilden;
1.6 zwischen der inneren Wandfläche (2) der Mischkammer und der Außenfläche eines jeden Hohlkörpers (9.1, 9.2) befindet sich ein erster bzw. ein zweiter Zwischenraum (10.1, 10.2);
1.7 der erste Zwischenraum (10.1) steht mit Anschlüssen für Dieselkraftstoff bzw. Wasser in leitender Verbindung, der zweite Zwischenraum (10.2) steht mit dem Anschluß für das Gemisch in leitender Verbindung;
1.8 die beiden Wirbelkammern sind durch einen Kanal (12) miteinander verbunden;
1.9 die erste Wirbelkammer ist über wenigstens eine Bohrung (14.1) in der Wand des ersten Hohlkörpers (9.1) mit dem ersten Zwischenraum (10.1) verbunden, und die zweite Wirbelkammer ist über wenigstens eine Bohrung (14.2) in der Wand des zweiten Hohlkörpers (9.2) mit dem zweiten Zwischenraum (10.2) verbunden.

2. Emulgiervorrichtung nach Anspruch 1, dadurch gekennzeichnet, daß der Kanal (12) nach Art einer Venturidüse ausgebildet ist (Doppeltrichter).

3. Emulgiervorrichtung nach Anspruch 1 oder 2, dadurch gekennzeichnet, daß die beiden Zwischenräume (10.1, 10.2) durch eine scheibenförmige Wand (Ringwand 16) voneinander getrennt sind.

4. Emulgiervorrichtung nach einem der Ansprüche 1-3, dadurch gekennzeichnet, daß die Mischkammer und die beiden Hohlkörper (9.1, 9.2) in Bezug auf eine zur Strömungsrichtung im Kanal (12) senkrechte Ebene, die den Kanal (12) in zwei gleiche Längsabschnitte unterteilt, symmetrisch angeordnet und gestaltet sind.

5. Emulgiervorrichtung nach einem der Ansprüche 1-4, dadurch gekennzeichnet, daß die beiden Hohlkörper (9.1, 9.2) jeweils im wesentlichen die Form eines Fingerhutes haben.

6. Emulgiervorrichtung nach Anspruch 5, dadurch gekennzeichnet, daß der Kanal (12) aus einem zylindrischen Körper (15) gebildet ist, und daß die beiden Hohlkörper (9.1, 9.2) von beiden Seiten her auf den zylindrischen Körper (15) aufgeschoben sind.

7. Emulgiervorrichtung nach Anspruch 3 und 6, sowie nach einem der Ansprüche 4 oder 5, dadurch gekennzeichnet, daß der zylindrische Körper (15) die Ringwand (16) trägt, bzw. mit dieser einteilig verbunden ist.

8. Emulgiervorrichtung nach einem der Ansprüche 3-7, dadurch gekennzeichnet, daß das Gehäuse (1) in zwei Teilgehäuse (1.1, 1.2) unterteilt und die Ringwand (16) zwischen diesen beiden Teilgehäusen eingespannt ist.

9. Emulgiervorrichtung nach einem der Ansprüche 1-8, dadurch gekennzeichnet, daß die Wirbelkammern - in einem in Strömungsrichtung durch den Kanal (12) gelegten Schnitt - eine elliptische Gestalt haben.

10. Emulgiervorrichtung nach einem der Ansprüche 1-9, dadurch gekennzeichnet, daß am Gehäuse ein Anschluß (5.2) vorgesehen ist, zum Anschluß einer Rücklaufleitung zwischen einer Einspritzpumpe und dem ersten Zwischenraum (10.1).

11. Emulgiervorrichtung nach einem der Ansprüche 1-10, dadurch gekennzeichnet, daß die beiden Zwischenräume (10.1 und 10.2) über eine Bypassleitung miteinander verbindbar sind.

## Claims

1. Emulsifying device for emulsifying of diesel fuel and water, comprising the following features:
1.1 a housing (1), comprising a mixing chamber with an inner wall (2);
1.2 a port (3) at the housing (1) for a water injection nozzle (4);
1.3 a port at the housing for introducing of diesel fuel;
1.4 a port (7, 8) at the housing (1) for the discharge of a mixture of diesel fuel and water; characterized by the following features:
1.5 within the mixing chamber there are arranged two hollow bodies (9.1, 9.2), each forming a vortex chamber;
1.6 between the inner wall surface (2) of the mixing chamber and the outer wall surface of each hollow body (9.1, 9.2) there is a first respectively a second intermediate space (10.1, 10.2);
1.7 the first intermediate space (10.1) is connected with ports for diesel fuel respectively of water, and the second intermediate space (10.2) is connected to the port for the mixture;
1.8 the two vortex chambers are connected with each other through a channel (12);
1.9 the first vortex chamber communicates via a bore (14.1) in the wall of the first hollow body (9.1) with the first intermediate space (10.1), and the second vortex chamber communicates via at least one bore (14.2) in the wall of the second hollow body (9.2) with the second intermediate space (10.2).

2. Emulsifying device (1) according to claim 1, characterized in that the channel (2) is of a shape similar to a Venturi nozzle (double funnel).

3. Emulsifying device according to claims 1 or 2, characterized in that the two intermediate spaces (10.1, 10.2) are separated from each other by a disk shaped wall (annular wall 16).

4. Emulsifying device according to one of claims 1 to 3, characterized in that the mixing chamber and the two hollow bodies (9.1, 9.2) relative to a plane perpendicular to the direction of flow in the channel (12) which plane divides the channel (2) in two equal portions of length, is arranged and shaped symmetrically.

5. Emulsifying device according to one of claims 1 to 4, characterized in that each of the hollow bodies (9.1, 9.2) essentially have the shape of a thimble.

6. Emulsifying device according to claim 5, characterized in that the channel (12) is formed by a cylindrical body (15), and that each of the two hollow bodies (9.1, 9.2) are pushed over the cylindrical body (15) from two sides.

7. Emulsifying device according to claims 3 and 6, as well as to claims 4 or 5, characterized in that the cylindrical body (15) carries the annular wall (16) respectively is connected herewith so as to form one single piece.

8. Emulsifying device according to claims 3 to 7, characterized in that the housing (1) is divided into two partial housings (1.1, 1.2), and that the annular wall (16) is clamped between these two partial housings.

9. Emulsifying device according to one of claims 1 to 8, characterized in that the vortex chambers have an elliptical shape, as seen in a section through the channel (12) in the direction of flow.

10. Emulsifying device according to one of claims 1 to 9, characterized in that at the housing there is provided a port (5.2) for a return line between an injection pump and the first intermediate space (10.1).

11. Emulsifying device according to claims 1 to 10, characterized in that the two intermediate spaces (10.1 and 10.2) may brought into communication with each other via a bypass line.

## Revendications

1. Dispositif pour produire une émulsion de carburant Diesel (ou gas-oil) et d'eau ayant les caractéristiques suivantes :
1.1 un boîtier (1) ayant une chambre de mélange avec une surface de paroi intérieure (2) ;
1.2 un branchement (3) réalisé sur le boîtier (1) pour une buse d'injection d'eau (4) ;
1.3 un branchement sur le boîtier pour l'alimentation en gas-oil ;
1.4 un branchement (7, 8) sur le boîtier (1) pour la sortie du mélange gas-oil et eau ; dispositif caractérisé par les points suivants :
1.5 à l'intérieur de la chambre de mélange il y a deux corps creux (9.1, 9.2) formant chacun une chambre de turbulence ;
1.6 entre la surface de paroi intérieure (2) de la chambre de mélange et la surface extérieure de chaque corps creux (9.1, 9.2) se trouve une première et une seconde chambre intermédiaire (10.1, 10.2) ;
1.7 la première chambre intermédiaire (10.1) est reliée à des branchements pour le gas-oil et pour l'eau, la seconde chambre intermédiaire (10.2) communique avec le branchement pour le mélange ;
1.8 les deux chambres de turbulence sont reliées par un canal (12) ;
1.9 la première chambre de turbulence est reliée par au moins un perçage (14.1) de la paroi du premier corps creux (9.1) avec la première chambre intermédiaire (10.1) et la seconde chambre de turbulence est reliée par au moins un perçage (14.2) de la paroi du second corps creux (9.2) avec la seconde chambre intermédiaire (10.2).

2. Dispositif pour produire une émulsion selon la revendication 1, caractérisé en ce que le canal (12) est en forme de venturi (double entonnoir).

3. Dispositif pour produire une émulsion selon la revendication 1 ou 2, caractérisé en ce que les deux volumes intermédiaires (10.1, 10.2) sont séparés par une cloison en forme de rondelle (paroi annulaire 16).

4. Dispositif pour produire une émulsion selon l'une des revendications 1 à 3, caractérisé en ce que la chambre de mélange et les deux corps creux (9.1, 9.2) sont symétriques et sont formés par rapport à un plan perpendiculaire à la direction d'écoulement du canal (12), ce plan subdivisant le canal (12) en deux segments de longueur identique.

5. Dispositif pour produire une émulsion selon l'une des revendications 1 à 4, caractérisé en ce que les deux corps creux (9.1, 9.2) ont en principe une forme de dé à coudre.

6. Dispositif pour produire une émulsion selon la revendication 5, caractérisé en ce que le canal (12) est formé d'un corps cylindrique (15) et les deux corps creux (9.1, 9.2) sont emmanchés de part et d'autre sur le corps cylindrique (15).

7. Dispositif pour produire une émulsion selon la revendication 3 et 6, ainsi que selon l'une des revendications 4 ou 5, caractérisé en ce que le corps cylindrique (15) porte la paroi annulaire (16) ou est relié à celle-ci en une seule pièce.

8. Dispositif pour produire une émulsion selon l'une des revendications 3 à 7, caractérisé en ce que le boîtier (1) est subdivisé en deux parties de boîtier (1.1, 1.2) et la paroi annulaire (16) est serrée entre les deux parties de boîtier.

9. Dispositif pour produire une émulsion selon l'une des revendications 1 à 8, caractérisé en ce que les chambres de turbulence présentent dans une coupe passant à travers le canal (12) suivant la direction de l'écoulement, une forme elliptique.

10. Dispositif pour produire une émulsion selon l'une des revendications 1 à 9, caractérisé en ce que le boîtier comporte un branchement (5.2), pour brancher une conduite de retour entre une pompe d'injection et la première chambre intermédiaire (10.1).

11. Dispositif pour produire une émulsion selon l'une des revendications 1 à 10, caractérisé en ce que les deux chambres intermédiaires (10.1, 10.2) peuvent être reliées par une conduite de dérivation.
